Europäisches Patentamt

European Patent Office

Office européen des brevets

(19)

(11) Veröffentlichungsnummer: **0 211 799**
**A2**

(12) # EUROPÄISCHE PATENTANMELDUNG

(21) Anmeldenummer: 86730116.0

(22) Anmeldetag: 23.07.86

(51) Int. Cl.⁴: **B 22 C 1/22**

(30) Priorität: 29.07.85 DE 3527086

(43) Veröffentlichungstag der Anmeldung:
25.02.87 Patentblatt 87/9

(84) Benannte Vertragsstaaten:
AT BE CH DE FR GB IT LI LU NL SE

(71) Anmelder: Hüttenes-Albertus Chemische-Werke GmbH
Wiesenstrasse 23-64
D-4000 Düsseldorf-Heerdt 11(DE)

(72) Erfinder: Vujevic, Aleksandar, Dipl.-Chem.
Rosendalstrasse 25
D-4030 Ratingen 8(DE)

(74) Vertreter: Eikenberg & Brümmerstedt Patentanwälte
Schackstrasse 1
D-3000 Hannover 1(DE)

(54) Durch Begasen härtbares Bindemittel für Giesserei-Formstoffmischungen.

(57) Das beschriebene Bindemittel enthält eine wäßrige Lösung eines stark alkalischen Phenol-Formaldehyd-Harzes ("Phenolatharz"), der erfindungsgemäß 2 - 10 Gew.% Glycerin und ggfs. auch noch 1 - 10 Gew.% Polyethylenglycol mit einem Molekulargewicht von 200 - 600 zugesetzt sind. Die Zusatzmengen sind jeweils auf die Harzlösung bezogen und auf insgesamt 15 Gew.% begrenzt.

Zum Gebrauch wird Gießerei-Formstoff, z.B. Sand, mit der Harzlösung vermischt und anschließend durch Begasung mit verdampfbaren Estern, z.B. mit Alkylformiaten mit bis zu 4 C-Atomen ausgehärtet. Der Zusatz von Glycerin und Polyethylenglycol zur Harzlösung bewirkt dabei, daß die Formstoffmischung nicht zur Verkrustung neigt und daß sich die Festigkeiten der erhaltenen Formteile erhöhen.

EP 0 211 799 A2

Hüttenes-Albertus

Chemische Werke GmbH                         380/117 EP


Durch Begasen härtbares Bindemittel
für Gießerei-Formstoffmischungen


Zur Herstellung von Gießereiformteilen sind verschiedene Gashärteverfahren bekannt, bei denen das in der Formstoffmischung enthaltene Bindemittel durch Begasen (Beduschen) mit einem Härter oder Katalysator ausgehärtet wird. Typische Beispiele sind das Härten von Wasserglas durch Begasen mit Kohlendioxid ($CO_2$-Verfahren), das Härten von säurehärtbaren Kunstharzen durch Begasen mit Schwefeldioxid oder anderen Säuren bzw. sauren Verbindungen ($SO_2$-Verfahren) und das Härten von urethanbildenden Kunstharzen durch Begasen mit Aminen (Coldbox-Verfahren). Diese Verfahren sind in der Gießereitechnik seit langer Zeit etabliert.

In der EP-PS 86 615 ist ein weiteres Gashärteverfahren beschrieben, welches darin besteht, daß eine wässrige Lösung eines stark alkalischen Phenol-Formaldehyd-Harzes (nachfolgend auch als "Phenolatharz" bezeichnet) als Bindemittel verwendet wird und die Härtung der Formstoffmischung durch Begasen mit einem Alkylformiat erfolgt. Erprobungen haben gezeigt, daß dieses weitere Verfahren gegenüber den etablierten Verfahren gewisse Vorteile besitzt. Insbesondere ist gegenüber dem $CO_2$-Verfahren der Zerfall der Formteile nach dem Abguß besser, gegenüber dem $SO_2$-Verfahren die Geruchsbelästigung bei der Kernherstellung wesentlich geringer und gegenüber dem Coldbox-Verfahren die Geruchsbelästigung ebenfalls geringer sowie die Qualität der Gußteile besser.

Somit hätte das in der EP-PS 86 615 beschriebene Gashärteverfahren Aussichten, die etablierten Verfahren in bestimmten Anwendungsbereichen zu ersetzen, wenn sich nicht auch Nachteile ergeben hätten, die den praktischen Einsatz erschweren bzw.
unmöglich machen. So liegen die Festigkeiten der gemäß der EP-PS
86 615 hergestellten Formteile im Vergleich mit entsprechenden
Formteilen, die nach dem $SO_2$-Verfahren oder nach dem Coldbox-Verfahren hergestellt wurden, relativ niedrig. Außerdem bildet sich
auf der Oberfläche der Formstoffmischung sehr rasch (schon nach
1 - 2 Stunden je nach der Temperatur) eine feste Kruste, die
keine automatische Dosierung und Verarbeitung der Mischung mehr
zuläßt. Beispielsweise setzen sich beim Schießen von Kernen die
Schießschlitze zu und die Kernkästen werden nicht vollständig
ausgeschossen. Im Gegensatz dazu lassen sich eine $SO_2$-Mischung
über 24 Stunden lang und eine Coldbox-Mischung noch bis zu 6
Stunden lang einwandfrei verarbeiten.

Mit der Erfindung soll nunmehr ein durch Begasen mit
Alkylformiat oder anderen geeigneten Estern härtbares Bindemittel
zur Verfügung gestellt werden, das die beschriebenen Nachteile
nicht mehr aufweist, d.h. das zu Formteilen mit höheren Festigkeiten führt und nicht zur Verkrustung der Formstoffmischung
neigt.

Ausgehend von einem Bindemittel auf der Basis einer
wässrigen Lösung eines Phenolatharzes kennzeichnet sich das erfindungsgemäß verbesserte Bindemittel dadurch, daß der Harzlösung
2 - 10 Gew.% Glycerin zugesetzt sind. Zusätzlich können der
Harzlösung auch noch 1 - 10 Gew.% Polyethylenglycol mit glycerinähnlicher Konsistenz (Molekulargewicht 200 bis 600) zugesetzt
sein, wobei es dann zweckmäßig ist, die Zusatzmengen an Glycerin
und Polyethylenglycol auf insgesamt 15 Gew.% zu begrenzen, um den Harzgehalt der Harzlösung nicht zu stark abzusenken. Die Prozentangaben sind dabei jeweils auf die Harzlösung bezogen.

Mit dem erfindungsgemäßen Bindemittel wird die Lagerfähigkeit der Formstoffmischung auf über 24 Stunden und mehr verlängert, ohne daß irgendwelche Verkrustungen der Mischung eintreten. Außerdem besitzen die mit dem erfindungsgemäßen Bindemittel hergestellten Formteile auch eine deutlich erhöhte Festigkeit. Dieser Erfolg der Erfindung läßt sich z. Zt. noch nicht erklären und war auch nicht vorhersehbar. Als ganz besonders überraschend ist dabei die Tatsache anzusehen, daß die verbesserte
Lagerfähigkeit der Formstoffmischung von einer deutlichen Erhöhung der Festigkeiten der Formteile begleitet wird, obgleich weder Glycerin noch Polyethylenglycol mit Methylformiat ausgehärtet
werden können.

Als Phenolatharz kommen für die Zwecke der Erfindung
alle stark alkalischen Phenol-Formaldehyd-Harze in Betracht.
Diese Harze werden üblicherweise in Gegenwart von größeren Mengen
starker Alkalien (Kalilauge, Natronlauge u.dgl.) kondensiert und
fallen dabei in Form einer wässrigen Lösung an, die zweckmäßig
auf einen Harzgehalt von 50 bis 75 Gew.% und vorzugsweise 50 -
60 Gew.% eingestellt wird. Die Harzlösung kann noch weitere
übliche Zusatzstoffe enthalten, insbesondere ein Silan. Hierbei
haben sich Silane der allgemeinen Formel $(R'O)_3SiR$ ($R'$ = Alkyl
und R = Alkyl, Alkoxialkyl oder Alkylaminoalkyl mit bis zu 6 C-
Atomen), wie beispielsweise $\gamma$-Aminopropyltriethoxisilan oder
$\gamma$-Glycidoxipropyltrimethoxisilan gut bewährt. Der Zusatz an Glycerin und Polyethylenglycol wird bevorzugt der fertigen Harzlösung zugesetzt, kann aber auch in die Formstoffmischung eingebracht werden, so daß das erfindungsgemäße Bindemittel gewissermaßen "in situ" entsteht.

Zur Härtung des erfindungsgemäßen Bindemittels können
alle Ester verwendet werden, die sich in eine zum Begasen (Beduschen) geeignete Form überführen lassen. Insbesondere sind dies die leicht verdampfbaren Alkylformiate mit bis zu 4 C-Atomen im Alkylrest, aber ebenso lassen sich auch andere Ester wie Methylacetat, Ethylacetat usw. einsetzen.

Nunmehr wird die Erfindung anhand von zwei Ausführungsbeispielen und einem Vergleichsbeispiel näher erläutert. Dabei werden zunächst die Herstellung des Bindemittels und dessen Verarbeitung beschrieben, und anschließend werden die Untersuchungsergebnisse dargelegt.

Die Herstellung des Bindemittels wurde folgendermaßen durchgeführt:

## Beispiel 1 (Vergleichsbeispiel)

In einem Reaktor, der mit Thermometer, Rührer und Kühler versehen war, wurden 168 kg Kalilauge (45%ig) und 282 kg Phenol vorgelegt. Dann wurden langsam 463 kg Formalin (37%ig) zugegeben. Die Reaktionsmischung erwärmte sich durch exotherme Reaktion und wurde, nachdem die Temperatur auf 100°C angestiegen war, 30 min lang auf dieser Temperatur gehalten. Danach wurde die Mischung auf 70°C abgekühlt und wiederum 30 min lang auf dieser Temperatur gehalten. Dann wurde die Temperatur auf 50°C gesenkt, und es wurden 100 l Wasser im Vollvakuum abdestilliert. Im Anschluß daran wurde die Mischung nochmals 2 Stunden lang bei 70°C gehalten und, nachdem sie auf unter 30°C abgekühlt war, noch mit 3,5 kg ß-Glycidoxipropyltrimethoxisilan versetzt. Es ergab sich eine stabile wässrige Harzlösung mit einem Feststoffgehalt von 52,8 Gew.-%.

## Beispiel 2 (Erfindungsbeispiel)

Eine Charge von 813 kg der Harzlösung gemäß Beispiel 1 wurde mit 47,5 kg Glycerin und 28,5 kg Polyethylenglycol 200 versetzt (5,3 Gew.-% Glycerin und 3,2 Gew.-% Polyethylenglycol, also insgesamt 8,5 Gew.-%, bezogen auf die Harzlösung).

## Beispiel 3 (Erfindungsbeispiel)

Eine Charge von 813 kg der Harzlösung gemäß Beispiel 1 wurde mit 43 kg Glycerin versetzt (5 Gew.% Glycerin, bezogen auf die Harzlösung).

Sodann wurden Formstoffmischungen aus jeweils 100 Gewichtsteilen Formstoff (Giessereisand H 33) und 1,4 Gewichtsteilen der Harzlösung gemäß Beispiel 1 bzw. Beispielen 2 und 3 gefertigt. Diese Mischungen wurden auf ihre Lagerfähigkeit und auf die Festigkeit der mit ihnen hergestellten Formteile untersucht.

Zur Untersuchung der Festigkeit wurden in einer Schießmaschine Rundkerne hergestellt, zur Härtung 20 sec lang mit Methylformiat begast und dann auf ihre Biegefestigkeit geprüft. Die Prüfung erfogte teils sofort und teils nach einer Zwischenlagerung der Kerne unter normalen Umgebungsbedingungen. Die Ergebnisse sind in der Tabelle 1 zusammengefaßt. Es ist zu erkennen, daß die Festigkeitswerte bei den erfindungsgemäß hergestellten Kernen deutlich besser sind als bei den Kernen gemäß dem Vergleichsbeispiel. Das gilt insbesondere für die Sofortfestigkeiten, die für Gießerei-Formteile generell möglichst hoch sein sollen, weil das eine schnelle Entnahme der Formteile aus dem Formwerkzeug gewährleistet und auch eine sofortige Weiterverarbeitung der Formteile ermöglicht. In dieser Hinsicht liefert das Beispiel 3 die besten Ergebnisse. In den Fällen jedoch, in denen die Formteile vor der Weiterverarbeitung noch gelagert werden, muß auch der zeitliche Verlauf der Festigkeiten mit berücksichtigt werden, und dann ist Beispiel 2 günstiger.

Zur Untersuchung der Lagerfähigkeit wurden Proben von je 10 kg der mit der Harzlösung gemäß Beispiel 1 bzw. Beispielen 2 und 3 gefertigten Formstoffmischungen in gleichen, nach oben offenen Behältern nebeneinanderstehend gelagert. Die freie Oberfläche der Proben war gleich. Die Verkrustung wurde alle 30 Minuten geprüft. Die Ergebnisse sind in der Tabelle 2 niedergelegt. Auch hier ist die Überlegenheit der erfindungsgemäßen Harzlösungen ganz offensichtlich.

Tabelle 1: Biegefestigkeiten in N/cm²

| Prüfung | sofort | nach 1 h | nach 24 h |
|---|---|---|---|
| Beispiel 1 (Vergleich) | 50 | 80 | 100 |
| Beispiel 2 (Erfindung) | 80 | 150 | 160 |
| Beispiel 3 (Erfindung) | 100 | 130 | 100 |

Tabelle 2: Lagerfähigkeit der Mischung

| Verkrustung nach | Beispiel 1 | Beispiele 2 + 3 |
|---|---|---|
| 30 min | leichte Zunahme der Viskosität der Oberfläche | keine |
| 60 min | leichte Krustenbildung | keine |
| 90 min | 2-3 mm Kruste | keine |
| 120 min | feste Kruste von 3 - 4 mm | keine |
| 150 min | feste Kruste (*) | keine |
| 180 min | feste Kruste (*) | keine |
| 210 min | feste Kruste (*) | keine |
| 24 h | feste Kruste (*) | leichte Austrocknung an der Oberfläche |

(*) Die Kruste nimmt in der Dicke nur noch unwesentlich zu, bekommt aber eine zunehmende Festigkeit.

0211799

Patentansprüche
--------------------------------

1.      Durch Begasen mit verdampfbaren Estern härtbares Bindemittel für Gießerei-Formstoffmischungen, enthaltend eine wässrige
Lösung eines stark alkalischen Phenol-Formaldehyd-Harzes, dadurch
gekennzeichnet, daß der Harzlösung 2 - 10 Gew.%, bezogen auf die
Harzlösung, Glycerin zugesetzt sind.

2.      Bindemittel nach Anspruch 1, dadurch gekennzeichnet,
daß der Harzlösung zusätzlich 1 - 10 Gew.%, bezogen auf die Harzlösung, Polyethylenglycol mit einem Molekulargewicht von
200 bis 600 zugesetzt sind.

3.      Bindemittel nach Anspruch 2, dadurch gekennzeichnet,
daß die Zusatzmengen an Glycerin und Polyethylenglycol auf insgesamt 15 Gew.%, bezogen auf die Harzlösung, begrenzt sind.